# DEMANDE DE BREVET EUROPEEN

(11) **EP 2 110 296 A2**
(43) Date de publication de la demande: **21.10.2009**
(21) Numéro de dépôt: 09158079.5
(22) Date de dépôt: 16.04.2009
(51) Int. Cl.: B62D 25/08, B62D 21/15, B62D 29/00, B60R 21/34, B62D 25/24

(54) **Elément de structure pour un véhicule automobile**

(30) Priorité: 17.04.2008 FR 0852615
(71) Demandeur: Eurostyle France, 91370 Verrières le Buisson (FR)
(72) Inventeur: Savoure, Jean-Marie, 36260, REUILLY (FR); Tirlemont, Christophe, 36330, LE POINCONNET (FR)
(74) Mandataire: Thinat, Michel

(57) **Abrégé**

L'invention concerne un élément de structure pour un véhicule automobile, destiné à la fois à absorber des efforts mécaniques prédéterminés, à assurer une étanchéité aux fluides et à réduire la propagation d'ondes acoustiques.

L'élément de structure comprend une pièce rigide (1) réalisée en une première matière et pourvue d'au moins une zone fusible (11, 12), qui est revêtue au moins partiellement d'une seconde matière (2) différente de la première.

## Description

L'invention concerne un élément de structure pour un véhicule automobile.

Dans le domaine de la construction automobile, la réglementation concerne de plus en plus d'aspects de sécurité et d'aspects de confort. Parmi les aspects de confort, bon nombre ne visent pas seulement le confort des usagers des véhicules automobiles, mais aussi le confort de personnes se trouvant aux alentours des véhicules automobiles, par exemple des piétons et des personnes habitant au bord de, ou à proximité de, routes par lesquelles passent les véhicules automobiles. Quel que soit donc le domaine concerné, la réglementation impose généralement des efforts maximums ou des valeurs de transmission maximales.

Lorsqu'il s'agit d'efforts mécaniques, la réglementation impose des efforts maximums à transmettre ou des minima d'énergie à dissiper, par un élément soumis à un choc ou à une sollicitation dirigée. Et dans le domaine phonique, la réglementation impose pour les différentes applications des valeurs minima d'atténuation, également appelées gain d'isolement.

Aux exigences mécaniques et phoniques se rajoute une autre exigence, à savoir l'exigence que les moyens avec lesquels on répond aux deux premières exigences doivent être conçus de manière à assurer l'étanchéité aux fluides, notamment à l'air et à l'eau, lorsque de tels moyens, par exemple des éléments de structure, doivent être disposés dans une position de séparation entre deux compartiments ou deux autres environnements.

La réponse aux exigences d'un effort seuil à transmettre, consiste en général en l'utilisation de zones fusibles pour concentrer les contraintes dans des zones prédéterminées et pour provoquer la rupture ou l'effacement de l'élément de structure lorsqu'un effort dépasse la limite posée.

Et dans le domaine phonique, la réponse aux exigences d'un gain d'isolement minimum consiste en général en l'introduction d'une masse qui, de par sa nature et de par sa disposition, absorbe une grande partie de l'énergie phonique.

La technique des zones fusibles consiste à pourvoir une pièce ou un élément de structure avec une épaisseur ou une section transversale localement réduite par rapport à l'épaisseur ou à la section transversale du restant de la pièce ou de l'élément de structure. De cette manière, on affaiblit la pièce à un endroit prédéterminé ou éventuellement suivant une ligne prédéterminée, avec la conséquence que la pièce va résister à des efforts agissant sur elle jusqu'à ce que l'effort atteigne le seuil prédéterminé. Si l'effort augmente encore davantage, la pièce se déforme ou casse à cet endroit.

Une zone fusible peut être formée essentiellement de trois manières différentes :
- d'abord par une géométrie particulière de l'élément de structure et plus particulièrement en lui donnant, à un endroit prédéterminé destiné à constituer la zone fusible, une épaisseur calculée au plus juste ou un début de plis le long duquel l'élément de structure se déforme de manière contrôlée en cas de dépassement des efforts agissant sur l'élément de structure ;
- ou en générant des restrictions d'épaisseur ou de section transversale dans les zones où la contrainte maximale est souhaitée ;
- une autre possibilité consiste à pourvoir l'élément de structure d'une ou de plusieurs ouvertures ; cette possibilité est particulièrement intéressante lorsque des restrictions d'épaisseur ne sont pas suffisantes pour obtenir une rupture de l'élément à un effort déterminé ou lorsque des contraintes de fabrication de l'élément de structure ne permettent pas une réduction suffisante de l'épaisseur de l'élément.

Alors qu'une géométrie particulière de l'élément de structure ou une réduction locale de son épaisseur ou de sa section transversale laisse l'élément de structure entier en ce qui concerne le passage de fluides tel l'air et l'eau, la réduction de l'épaisseur créée des ponts acoustiques et les ouvertures créent à la fois des ponts acoustiques et des passages de fluides.

Puisqu'il n'est généralement pas acceptable d'obtenir une sécurité mécanique accrue au prix d'une détérioration de l'isolation phonique ou d'une absence d'étanchéité aux fluides, le but de l'invention est de proposer un élément de structure qui puisse répondre aux trois exigences qui sont absorber des efforts mécaniques prédéterminés, assurer une étanchéité aux fluides et réduire la propagation d'ondes acoustiques.

Le but de l'invention est atteint avec un élément de structure pour un véhicule automobile, destiné à la fois à absorber des efforts mécaniques prédéterminés, à assurer une étanchéité aux fluides et à réduire la propagation d'ondes acoustiques, et qui comprend à cet effet une pièce rigide réalisée en une première matière et pourvue d'au moins une zone fusible, la pièce étant revêtue au moins partiellement d'une seconde matière différente de la première.

L'élément de structure selon l'invention remplit la triple tache octroyée à l'aide de deux composantes, à savoir une pièce rigide, métallique ou non, et un revêtement au moins partiel de cette pièce avec une matière différente de la première, de préférence une matière plastique.

La pièce rigide répond à la tache mécanique dans le sens qu'elle absorbe des efforts mécaniques jusqu'à un seuil prédéterminé et rompt ou s'efface à l'endroit conformé à cet effet lorsque l'effort dépasse le seuil prédéterminé. L'endroit est conformé à cet effet par une géométrie particulière ou par le choix des caractéristiques techniques de la matière à partir de laquelle la pièce rigide est réalisée ou encore par des zones fusibles obtenues soit par une réduction de l'épaisseur ou de la section transversale de la pièce dans la zone de rupture prévue soit par la réalisation d'une ou de plusieurs ouvertures.

Dans ce contexte, il convient de préciser qu'une restriction de l'épaisseur de la pièce et une réduction de la section transversale de la pièce sont considérées ici comme produisant le même effet, c'est-à-dire un affaiblissement de la pièce à l'endroit où la pièce doit rompre ou pour le moins se déformer.

Le fait de revêtir la pièce rigide au moins partiellement d'une seconde matière différente de celle en laquelle est réalisée la pièce rigide, assure la fonction d'étanchéité lorsque la pièce rigide est pourvue d'ouvertures et assure la fonction d'isolation phonique aussi bien dans le cas d'une restriction de la section transversale que lors de la présence d'une ou de plusieurs ouvertures pratiquées dans la pièce rigide.

C'est notamment pour cette dernière fonction, que la seconde matière de laquelle la pièce rigide est revêtue au moins partiellement, doit être à la fois souple et lourde. En effet, l'efficacité d'une isolation phonique dépend essentiellement de la masse du matériau isolant lorsqu'il s'agit de réduire la transmission d'ondes phoniques, c'est-à-dire d'ondes acoustiques transmises par la voie solide.

Pour réduire, ou idéalement empêcher, la propagation d'ondes acoustiques venant d'une source de bruit, vers une autre partie d'un véhicule, moyennant un revêtement couvrant au moins partiellement la pièce rigide, le revêtement peut être appliqué d'un côté ou de l'autre de la pièce rigide, tout comme il peut être appliqué sur les deux côtés ou, par trempage, sur la pièce rigide entière. Ces différentes façons de revêtir la pièce rigide sont particulièrement intéressantes lorsque l'élément de structure est conçu pour séparer deux environnements différents, par exemple le compartiment moteur de l'habitacle d'un véhicule automobile ou l'intérieur d'un véhicule automobile de l'extérieur de celui-ci.

D'autres caractéristiques et avantages de la présente invention ressortiront de la description de trois modes de réalisation d'un élément de structure selon l'invention. Cette description est faite en référence aux dessins dans lesquels :
la figure 1 représente un élément de structure en coupe longitudinale avec une restriction d'épaisseur et un revêtement appliqué sur un premier côté de l'élément de structure,
la figure 2 représente un élément de structure selon l'invention en une coupe longitudinale avec une ouverture et un revêtement appliqué sur le second côté de la pièce et
la figure 3 représente un élément de structure selon l'invention avec une ouverture et un revêtement des deux côtés de la pièce.

Sur chacune des trois figures, les lettres A et B désignent des environnements séparés par l'élément de structure selon l'invention. La lettre A désigne un environnement émetteur de bruit, par exemple l'espace ou le capot moteur ou l'espace entourant l'habitacle de la voiture ou encore le côté extérieur d'une porte d'un véhicule automobile. La lettre B désigne un environnement récepteur de bruit, notamment l'intérieur de l'habitacle de la voiture.

De plus, sur chacune des trois figures, est représenté un élément de structure selon l'invention qui comprend une pièce rigide 1 réalisée en une première matière et qui est pourvue d'une restriction d'épaisseur 11 ou d'une ouverture 12 définissant une zone fusible. La pièce rigide 1 est, dans l'exemple choisi, un élément essentiellement plat ou légèrement courbe ou bombé, présentant en tout cas deux faces opposées 13, 14, dont la face 13 est destinée à être orientée vers un environnement B récepteur de bruit, alors que la face opposée 14 est destinée à être orientée vers un environnement A source de bruit.

La pièce rigide 1 est revêtue d'une seconde matière 2 et/ou 4 différente de la première, comme détaillé ci-après, et est fixée de façon rigide, incorporant éventuellement une zone fusible, sur un élément 3 de la structure d'un véhicule automobile.

Dans l'exemple choisi, quelque soit le mode de réalisation considéré, l'élément de structure est formé de façon à résister jusqu'à un seuil prédéterminé à une contrainte F agissant au moins approximativement parallèlement à deux plans suivants lesquels deux parties de l'élément de structure s'étendent.

Pour simplifier l'explication de la présente invention, l'élément de structure est représenté avec une pièce rigide 1 pliée en trois parties dont une première partie 101 susceptible de recevoir la contrainte F, s'étend suivant un premier plan, une deuxième partie 102 s'étend perpendiculairement à la première partie 101 et une troisième partie 103 s'étend suivant un second plan parallèle au premier.

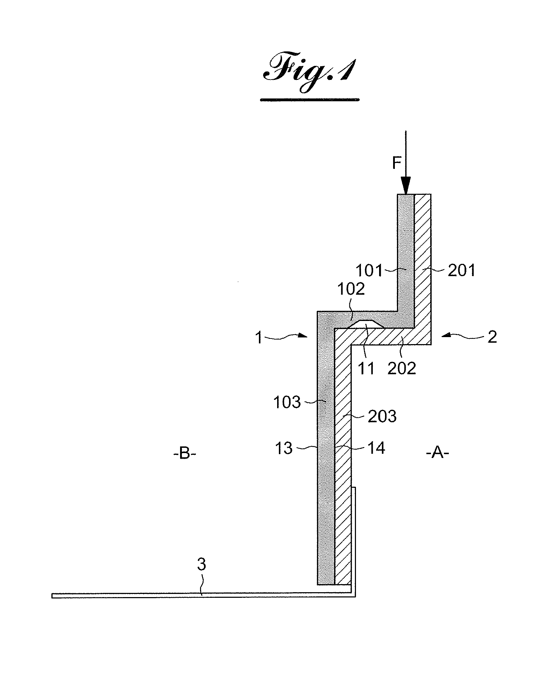

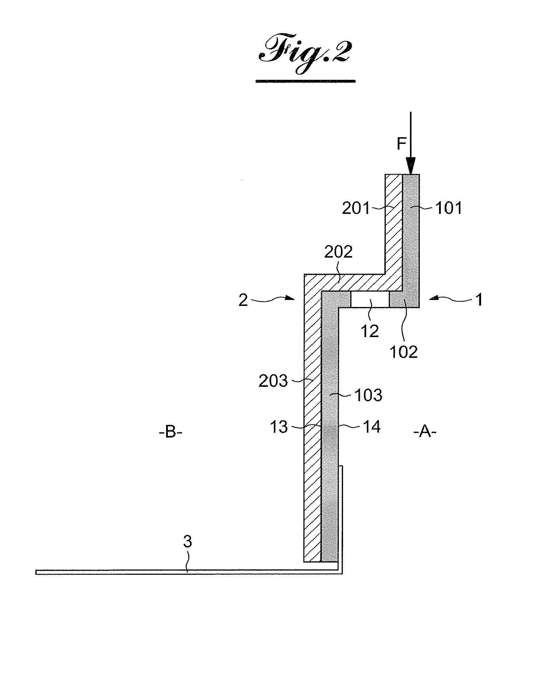

En conséquence, le revêtement 2 de l'élément de structure selon les modes de réalisation représentés sur les figures 1 et 2 comporte également trois parties. Une première partie 201 est appliquée sur la première partie 101 de la pièce rigide 1, une deuxième partie 202 est appliquée la partie 102 de la pièce rigide 1 et une troisième partie 203 est appliquée sur la troisième partie de la pièce rigide 1.

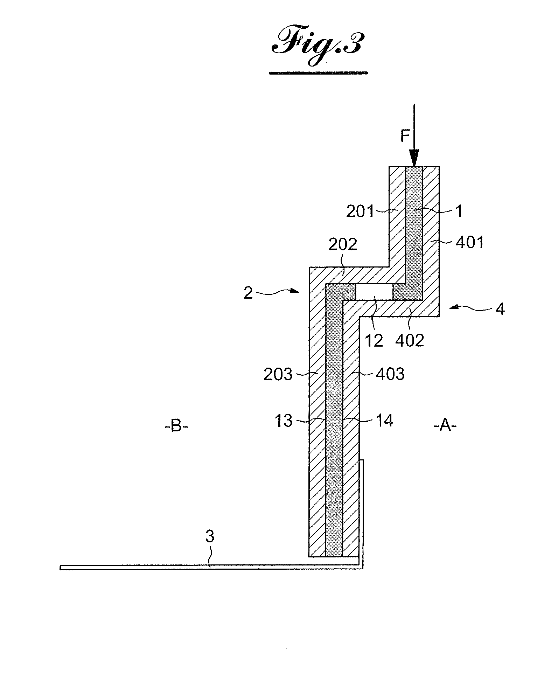

De manière analogue, le revêtement 4 de l'élément de structure selon le mode de réalisation représenté sur la figure 3 comporte également trois parties. Une première partie 401 est appliquée sur la première partie 101 de la pièce rigide 1, une deuxième partie 402 est appliquée la partie 102 de la pièce rigide 1 et une troisième partie 403 est appliquée sur la troisième partie de la pièce rigide 1.

Parmi les trois exemples choisis, la figure 1 représente l'élément de structure selon l'invention avec un revêtement 2 appliqué sur la face 14, destiné à être orienté vers l'environnement A comportant une source de bruit, alors que la figure 2 représente un mode de réalisation selon lequel la couche de revêtement 2 est appliquée sur la face 13 de la piège rigide destinée à être orientée du côté de l'environnement B qui doit être protégé du bruit.

La figure 3 représente l'élément de structure avec deux couches de revêtement dont la couche de revêtement 2 est appliquée du côté de l'environnement B récepteur de bruit alors que la couche de revêtement 4 est appliquée du côté de l'environnement A comportant une source de bruit.

Dans l'exemple de réalisation représenté sur la figure 3, les deux couches de revêtement 2 et 4 ne sont pas nécessairement réalisées en la même matière l'une et l'autre. En effet, pour tenir compte de caractéristiques particulières de chacun des deux environnements A et B, par exemple d'effets de résonance à l'intérieur de chacun des environnements, il peut être nécessaire, pour obtenir un résultat optimal, d'utiliser deux matières différentes, se distinguant l'une de l'autre par exemple par leur masse ou par leur texture, cette dernière donnant à la surface de chacun des deux revêtements une rugosité différente.

## Revendications

1. Elément de structure rigide (1) pour séparer deux volumes (A, B) dans un véhicule automobile, conformé à la fois pour absorber des efforts mécaniques (F) prédéterminés agissant essentiellement dans une des directions dans lesquelles l'élément de structure s'étend, pour assurer une étanchéité aux fluides et pour réduire la propagation d'ondes acoustiques entre les deux volumes (A, B), réalisé en une première matière, pourvu d'au moins une zone fusible (11, 12) et revêtu au moins partiellement d'une seconde matière (2) différente de la première,
**caractérisé en ce qu'**il est réalisé en trois parties (101 - 103) dont une partie intermédiaire (102) s'étendant transversalement par rapport aux deux autres parties (101, 103) et dans laquelle est formée la zone fusible (11, 12).

2. Elément de structure selon la revendication 1,
**caractérisé en ce que** la zone fusible (11) est réalisée par réduction de la section transversale de la pièce rigide (1).

3. Elément de structure selon la revendication 1 ou 2, **caractérisé en ce que** la zone fusible (12) est réalisée par une ouverture pratiquée dans la pièce rigide.

4. Elément de structure selon l'une quelconque des revendications 1 à 3, **caractérisé en ce que** la pièce rigide (1) présente essentiellement deux faces opposées (13, 14) dont l'une seulement est revêtue d'une couche (2) en la seconde matière.

5. Elément de structure selon l'une quelconque des revendications 1 à 3, **caractérisé en ce que** la pièce rigide (1) présente essentiellement deux faces opposées (13, 14) dont les deux faces sont revêtues d'une couche (2, 4) en la seconde matière.

6. Elément de structure selon l'une quelconque des revendications 1 à 3, **caractérisé en ce que** la pièce rigide (1) est entièrement revêtue de la seconde matière.

7. Elément de structure selon l'une quelconque des revendications 1 à 6, **caractérisé en ce que** la pièce rigide (1) est une pièce métallique.

8. Elément de structure selon l'une quelconque des revendications 1 à 6, **caractérisé en ce que** la pièce rigide (1) est réalisée en une première matière plastique.

9. Elément de structure selon la revendication 8,
**caractérisé en ce que** la pièce rigide (1) est réalisée par injection.

10. Elément de structure selon l'une quelconque des revendications 1 à 9, **caractérisé en ce que** la pièce rigide (1) est revêtue au moins partiellement par une matière plastique souple.

11. Véhicule automobile, **caractérisé en ce qu'**il comprend un élément de structure selon l'une quelconque des revendications 1 à 10.
